# EUROPEAN PATENT APPLICATION

(11) **EP 2 939 934 A1**
(43) Date of publication of application: **04.11.2015**
(21) Application number: 13869087.0
(22) Date of filing: 24.12.2013
(51) Int. Cl.: B64G 1/64

(54) **SEPARATION MECHANISM FOR SPACE STRUCTURE**

(30) Priority: 25.12.2012 JP 2012280559
(71) Applicant: Kawasaki Jukogyo Kabushiki Kaisha, Kobe-shi, Hyogo 650-8670 (JP)
(72) Inventor: HORIE, Youichi, Kakamigahara-shi Gifu 504-8710 (JP)
(74) Representative: Leinweber & Zimmermann
(86) International application number: PCT/JP2013/007543
(87) International publication number: WO 2014/103282

(57) **Abstract**

A separation mechanism (1A) of a space structure serves to separate a second structure (3) from a first structure (2) in the outer space. The separation mechanism (1A) includes a first member (4) fixed to the first structure (2) and a second member (5) fixed to the second structure (3). The first member (4) and the second member (5) are made of electrically insulating materials, both of which have relatively low thermal conductivity. A conductive layer (6) is interposed between the first member (4) and the second member (5). The first member (4) or the second member (5) is joined to the conductive layer (6) by a joining layer (7). The conductive layer (6) is configured to generate heat that destroys or melts the joining layer (7) when electric current is applied to the conductive layer (6).

## Description

### Technical Field

The present invention relates to a separation mechanism for use in a space structure such as a satellite or a rocket.

### Background Art

In recent years, various non-explosive apparatuses using no pyrotechnics have been proposed to be used as a separation mechanism of a space structure. For example, Patent Literature 1 discloses a separation mechanism 100 as shown in Figs. 4A and 4B.

In the separation mechanism 100 disclosed in Patent Literature 1, a satellite 120 is accommodated in a box-shaped rack 110, which is open in one direction. A conductive plate 130 is disposed at the bottom of the rack 110, and an interface plate 125 facing the conductive plate 130 is fixed to the satellite 120. Recesses are formed in the lower surface of the interface plate 125, and springs 140 are disposed in the respective recesses.

The lower surface of the interface plate 125 is adhered to the conductive plate 130 by a conductive decayable adhesive, which is not shown. The conductive decayable adhesive is an adhesive whose adhesive strength decreases when electric current is applied thereto, and consequently the adhesive is peeled off. Electric current from a battery 135 is applied to the conductive plate 130. As a result, the current flows through the conductive decayable adhesive, and thereby the conductive decayable adhesive is peeled off. Consequently, the satellite 120 is released from the inside of the rack 110 owing to the urging force of the springs 140.

### Citation List

### Patent Literature

PTL 1: Japanese Laid-Open Patent Application Publication No. 2011-251560

### Summary of Invention

### Technical Problem

However, in the case of such a separation mechanism using a conductive decayable adhesive, after the start of the application of the current to the conductive decayable adhesive, it takes some time (in some cases, several minutes) until the conductive decayable adhesive is peeled off. Thus, the responsiveness of the separation mechanism is insufficient.

In view of the above, an object of the present invention is to provide a separation mechanism of a space structure with favorable responsiveness.

### Solution to Problem

In order to solve the above-described problems, a separation mechanism of a space structure according to the present invention is a separation mechanism for separating a second structure from a first structure in the outer space. The separation mechanism includes: a first member fixed to the first structure and made of an electrically insulating material whose thermal conductivity is relatively low; a second member fixed to the second structure and made of an electrically insulating material whose thermal conductivity is relatively low; a conductive layer interposed between the first member and the second member; and a joining layer joining the first member or the second member to the conductive layer, the joining layer being made of an electrically insulating resin. The conductive layer is configured to generate heat that destroys or melts the joining layer when electric current is applied to the conductive layer.

According to the above configuration, when electric current is applied to the conductive layer, the conductive layer generates heat that destroys or melts the joining layer, and as a result, the second member is separated from the first member. In addition, since the conductive layer is sandwiched between the first member and the second member, both of which have low thermal conductivity, when electric current is applied to the conductive layer, heat generated as a result of the application of the current (i.e., Joule heat) does not easily dissipate, and the heat is accumulated in the conductive layer. As a result, the temperature of the conductive layer increases rapidly, and the destruction or melting of the joining layer occurs in a significantly short time. This makes it possible to obtain the separation mechanism with favorable responsiveness.

The joining layer may be a surface layer of the first member or the second member, which is made of a resin. According to this configuration, a very simple structure in which the conductive layer is sandwiched between the first member and the second member can be adopted.

Alternatively, the joining layer may be a layer made of an adhesive that is different from the first member or the second member. According to this configuration, various adhesives can be used, which makes it possible to improve the freedom in design.

### Advantageous Effects of Invention

The present invention makes it possible to obtain a separation mechanism of a space structure with favorable responsiveness.

### Brief Description of Drawings

Figs. 1A and 1B illustrate an operation of a separation mechanism of a space structure according to Embodiment 1 of the present invention.
Figs. 2A and 2B illustrate an operation of a separation mechanism of a space structure according to Embodiment 2 of the present invention.
Fig. 3 is a perspective view of a separation mechanism of a space structure according to a working example.

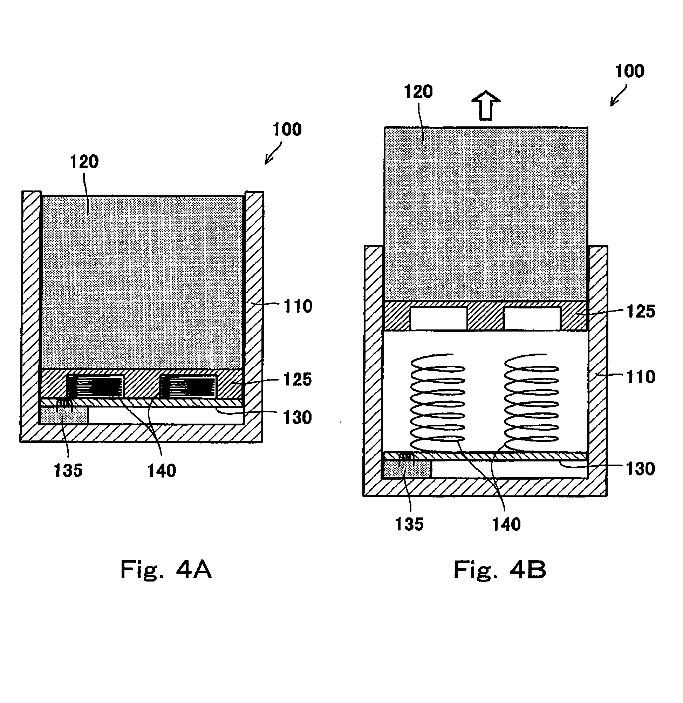

Figs. 4A and 4B illustrate an operation of a conventional separation mechanism of a space structure.

### Description of Embodiments

Hereinafter, embodiments of the present invention are described with reference to the drawings.

### (Embodiment 1)

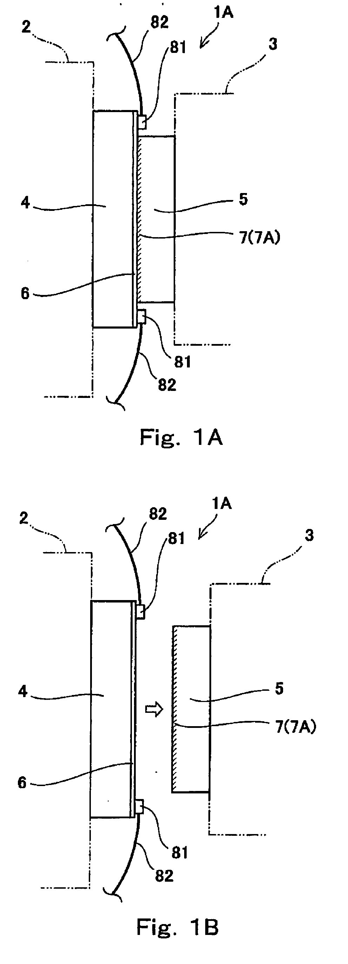

Figs. 1A and 1B show a separation mechanism 1A of a space structure according to Embodiment 1 of the present invention. The space structure includes a first structure 2 and a second structure 3. The separation mechanism 1A serves to separate the second structure 3 from the first structure 2 in the outer space.

Specifically, the separation mechanism 1A includes a first member 4 and a second member 5. The first member 4 is fixed to the first structure 2. The second member 5 is fixed to the second structure 3. A conductive layer 6 is interposed between the first member 4 and the second member 5. The second member 5 is joined to the conductive layer 6 by a joining layer 7.

In the present embodiment, the first member 4 and the second member 5 are plate-shaped and parallel to each other. However, as an alternative, the first member 4 and the second member 5 may have any shape, so long as the shape allows these members to make surface contact with each other with the conductive layer 6 interposed in between.

The first member 4 and the second member 5 are made of electrically insulating materials, both of which have relatively low thermal conductivity. The thermal conductivity of the materials forming the first member 4 and the second member 5 is desirably 2W/m·K or less, or more desirably, 1W/m·K or less. In the present embodiment, the second member 5 is made of a resin.

The material forming the first member 4 is not particularly limited, so long as the material has superior high-temperature resistance compared to the resin forming the second member 5. Examples of the material forming the first member 4 include ceramics, various heat electrically insulating materials, and resins having a higher heatproof temperature than that of the resin forming the second member 5. The heatproof temperature of a resin herein means a temperature at which a member made of the resin is destroyed or melted and loses its mechanical strength.

Among the aforementioned materials, it is desirable to use a resin from the viewpoint of low thermal conductivity. The resin to use may be either a thermosetting resin or a thermoplastic resin. It is particularly desirable to use an engineering plastic whose heatproof temperature is 100 °C or more. Examples of such an engineering plastic include polycarbonate (PC), polysulfone (PSU), polyamide (PA), polyacetal (POM), polyphenylene sulfide (PPS), polyether ether ketone (PEEK), and polyimide (PI).

The resin forming the second member 5 may be a resin whose heatproof temperature is less than 100 °C, such as polyvinyl chloride (PVC), polystyrene (PS), ABS resin, polyethylene (PE), or polypropylene (PP). However, it is preferable to use an engineering plastic whose heatproof temperature is 100 °C or more. The resin forming the second member 5 is not limited to a thermoplastic resin, but may be a thermosetting resin.

The aforementioned joining layer 7 is made of an electrically insulating resin. In the present embodiment, the joining layer 7 is a surface layer 7A of the second member 5. The joining layer 7 is formed as a result of the second member 5 being welded to the conductive layer 6.

The conductive layer 6 is a metal thin film, which is formed on the surface of the first member 4 by, for example, vapor deposition or plating. A pair of electrodes 81 is attached to the conductive layer 6. Electric current flows through the conductive layer 6 when voltage is applied between the electrodes 81 through cables 82. The conductive layer 6 is configured to generate heat that destroys or melts the joining layer 7 when electric current is applied to the conductive layer 6. As a result, the second member 5 is separated from the first member 4 as shown in Fig. 1B.

A suitable metal forming the conductive layer 6 is, for example, a metal with high electrical resistivity, such as nickel, chrome, or nichrome (nickel-chrome alloy). However, if the conductive layer 6 is configured such that the resistance between the electrodes 81 is high, a metal with low electrical resistivity, such as aluminum, may be used as the metal forming the conductive layer 6.

As described above, in the separation mechanism 1A according to the present embodiment, when electric current is applied to the conductive layer 6, the conductive layer 6 generates heat that destroys or melts the joining layer 7, and as a result, the second member 5 is separated from the first member 4. In addition, since the conductive layer 6 is sandwiched between the first member 4 and the second member 5, both of which have low thermal conductivity, when electric current is applied to the conductive layer 6, heat generated as a result of the application of the current (i.e., Joule heat) does not easily dissipate, and the heat is accumulated in the conductive layer 6. As a result, the temperature of the conductive layer 6 increases rapidly, and the destruction or melting of the joining layer 7 occurs in a significantly short time. This makes it possible to obtain the separation mechanism 1A with favorable responsiveness.

In the present embodiment, since the joining layer 7 is the surface layer 7A of the second member 5, a very simple structure in which the conductive layer 6 is sandwiched between the first member 4 and the second member 5 can be adopted.

In the present embodiment, the first member 4 is formed of a material whose high-temperature resistance is superior compared to the resin forming the second member 5. However, as an alternative, the first member 4 may be formed of a resin whose heatproof temperature is lower than that of the resin forming the second member 5. In this case, when electric current is applied to the conductive layer 6, the surface layer of the first member 4 is destroyed or melted. Consequently, the second member 5 is separated from the first member 4 in such a manner that a region of the conductive layer 6, to which the second member 5 is joined, fractures from the surrounding regions. That is, the joining layer 7 may be the surface layer of the first member 4, which is formed of a resin.

The first structure 2 may serve as a main structure and the second structure 3 may serve as an auxiliary structure, or alternatively, the second structure 3 may serve as a main structure and the first structure 2 may serve as an auxiliary structure.

### (Embodiment 2)

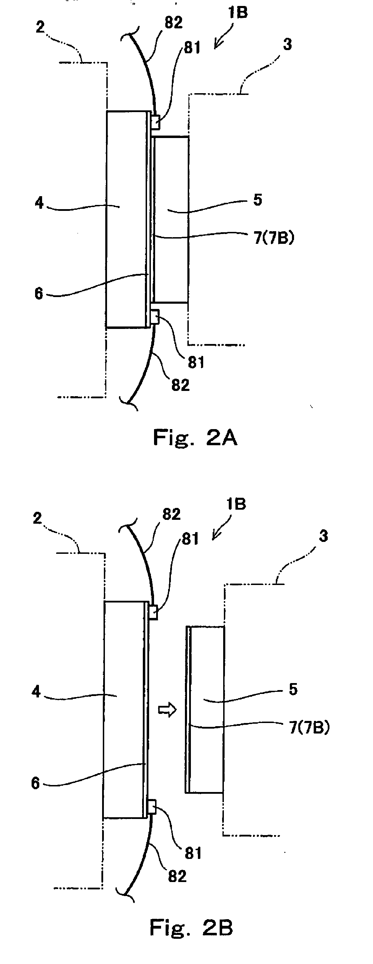

Next, a separation mechanism 1B of a space structure according to Embodiment 2 of the present invention is described with reference to Figs. 2A and 2B. In Embodiment 2, the same components as those described in Embodiment 1 are denoted by the same reference signs as those used in Embodiment 1, and repeating the same descriptions is avoided below.

The only difference between the separation mechanism 1A of Embodiment 1 and the separation mechanism 1B of Embodiment 2 is that the joining layer 7 made of an electrically insulating resin is a layer made of an adhesive 7B, which is different from the second member 5. That is, unlike a conductive decayable adhesive, no electric current flows through the adhesive 7B.

In the present embodiment, when electric current is applied to the conductive layer 6, the conductive layer 6 generates heat such that the temperature of the conductive layer 6 becomes higher than or equal to the softening temperature of the adhesive 7B. The softening temperature herein is a temperature that is measured by a measurement method stipulated by JIS K 6833-1. As a result, the joining layer 7 is destroyed or melted similar to Embodiment 1.

In the present embodiment, the first member 4 and the second member 5 may be formed of the same material. Specifically, the first member 4 and the second member 5 may be formed of any material, so long as the material is an electrically insulating material whose thermal conductivity is relatively low.

Also in the configuration of the present embodiment, the temperature of the conductive layer 6 increases rapidly, and the destruction or melting of the joining layer 7 occurs in a significantly short time. This makes it possible to obtain the separation mechanism 1B with favorable responsiveness.

In the present embodiment, since the joining layer 7 is a layer made of the adhesive 7B different from the second member 5, various adhesives can be used, which makes it possible to improve the freedom in design.

It should be noted that the conductive layer 6 may be a metal foil formed on the surface of the second member 5, and the joining layer 7 made of the adhesive 7B may be disposed between the first member 4 and the conductive layer 6.

### Example

Hereinafter, the present invention is described in more detail by using a working example. However, the present invention is not limited to the working example described below.

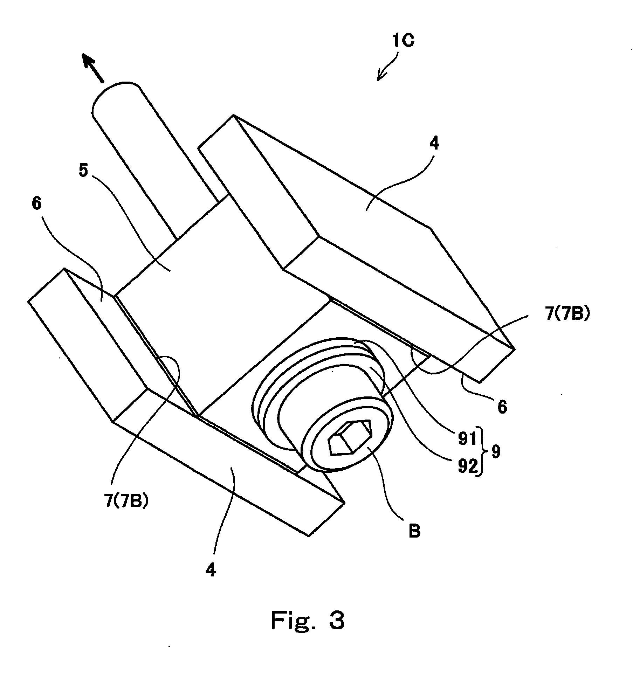

Fig. 3 shows a separation mechanism 1C according to the working example. First, ABS resin was used to fabricate the second member 5, which was a rectangular parallelepiped with a size of 18 mm × 10 mm × 10 mm. A through-hole for inserting a bolt B therein was formed at the center of the second member 5. Next, a glass cloth based thermal insulator with a thickness of 3 mm (ROSUNA board available from NIKKO KASEI CO., LTD.) was cut to the size of 10 mm × 30 mm, and thereby two plate-shaped first members 4 were obtained. Nickel was vapor-deposited on one main surface of each first member 4, and thereby conductive layers 6 with a thickness of 0.8 µm were formed. Finally, the adhesive 7B (Bond Quick 5 available from Konishi Co., Ltd.), which is a two-component adhesive containing an epoxy resin as a base agent and a polythiol resin as a hardening agent, was used to join the conductive layers 6 to a pair of opposite side surfaces of the second member 5, respectively. In this manner, the separation mechanism 1C was obtained.

As a test, the bolt B was inserted in the through-hole of the second member 5, and the bolt B was pulled in a direction indicated by an arrow in Fig. 3 with the first members 4 fixed. It should be noted that a spherical metal washer 9 including a recessed ring 91 and a protruding ring 92 was disposed between the head of the bolt B and an end surface of the second member 5, such that only force parallel to joining layers 7 was exerted on the joining layers 7.

In a state where no electric current was applied to the conductive layers 6, the second member 5 was separated from the first members 4 when the tensile force of the bolt B was about 2000 N. It is understood from this that the first members 4 and the second member 5 were firmly joined together.

Meanwhile, in a case where electric current was applied to the conductive layers 6 while the bolt B was being pulled with a tensile force of about 1000 N, the second member 5 was separated from the first members 4 only in 0.8 seconds after the start of the application of the current. It is understood from this that the responsiveness of the separation mechanism 1 C is favorable.

Although nickel was used as a metal in the above working example, each conductive layer may be formed by using a metal with lower electrical resistivity, for example, aluminum. In this case, the film thickness may be reduced, or a slit may be formed to form a circuit in a serpentine pattern to reduce the circuit width and increase the circuit length, such that the electrical resistance becomes the same as in the case of using nickel. In this manner, the same responsiveness as in the above working example can be obtained.

In the above working example, a commercially available adhesive is used. However, by using an adhesive with superior high-temperature resistance, the separation mechanism becomes usable even under a high-temperature environment although the responsiveness is slightly sacrificed. It should be noted that, in the outer space, it may be required that the separation mechanism be usable (i.e., capable of keeping the joint strength) even under an environment where the temperature exceeds 100 °C. Further, in a case where the joint is formed utilizing the welding of a resin, by utilizing the high-temperature resistance of the resin, separation mechanisms suitable for various temperature environments, respectively, can be developed.

### Reference Signs List

- 1A, 1B: separation mechanism of a space structure
- 2: first structure
- 3: second structure
- 4: first member
- 5: second member
- 6: conductive layer
- 7: joining layer
- 7A: surface layer
- 7B: adhesive
- 8: power feeding device

## Claims

1. A separation mechanism of a space structure for separating a second structure from a first structure in the outer space, the separation mechanism comprising:
a first member fixed to the first structure and made of an electrically insulating material whose thermal conductivity is relatively low;
a second member fixed to the second structure and made of an electrically insulating material whose thermal conductivity is relatively low;
a conductive layer interposed between the first member and the second member; and
a joining layer joining the first member or the second member to the conductive layer, the joining layer being made of an electrically insulating resin, wherein
the conductive layer is configured to generate heat that destroys or melts the joining layer when electric current is applied to the conductive layer.

2. The separation mechanism of a space structure according to claim 1, wherein
the joining layer is a surface layer of the first member or the second member, which is made of a resin.

3. The separation mechanism of a space structure according to claim 1, wherein
the joining layer is a layer made of an adhesive that is different from the first member or the second member.
